# EUROPÄISCHE PATENTSCHRIFT

(11) **EP 2 800 665 B1**
(45) Veröffentlichungstag und Bekanntmachung des Hinweises auf die Patenterteilung: **18.11.2015**
(21) Anmeldenummer: 12810173.0
(22) Anmeldetag: 13.12.2012
(51) Int. Cl.: B60C 23/04, B60C 23/00, B60Q 1/26

(54) **VORRICHTUNG ZUM ANZEIGEN EINES REIFENDRUCK-ZUSTANDES FÜR FAHRZEUGREIFEN EINES LASTWAGEN-ANHÄNGERS**
DEVICE FOR DISPLAYING A TYRE PRESSURE STATE FOR VEHICLE TYRES OF A TRUCK TRAILER
DISPOSITIF D'AFFICHAGE DE LA PRESSION DE GONFLAGE DES PNEUS D'UNE REMORQUE DE CAMION

(30) Priorität: 03.01.2012 DE 102012100024
(43) Veröffentlichungstag der Anmeldung: 12.11.2014
(73) Patentinhaber: Continental Reifen Deutschland GmbH, 30165 Hannover (DE)
(72) Erfinder: LEHMANN, Jörg, 30453 Hannover (DE); RÖSCH, Thomas, 93098 Mintrac (DE); LANGE, Bernd, 31675 Bückeburg (DE)
(74) Vertreter: Widjaja, Wira
(86) Internationale Anmeldenummer: PCT/EP2012/075330
(87) Internationale Veröffentlichungsnummer: WO 2013/102539

(56) Entgegenhaltungen:
- EP-A2- 1 510 401
- DE-A1-102009 003 460
- US-A- 4 065 750
- US-A- 4 131 876

## Beschreibung

Die Erfindung betrifft eine Vorrichtung zum Anzeigen eines Reifendruck-Zustandes für Fahrzeugreifen eines Lastwagen-Anhängers.

Mit Transpondern versehene Reifenmodule werden im Reifen, insb. bei Reifensensoren für LKW-Reifen, für verschiedene Aufgaben eingesetzt. Hierzu zählt insbesondere eine Reifenidentifikation, mit der ein Automobilhersteller u. a. schnell sowie automatisiert feststellen kann, aus welchem Reifenwerk ein bestimmter Reifen geliefert wurde und an welches Fahrzeug der Reifen montiert wurde. Andere Aufgaben sind in der Regel eine Luftdrucküberwachung, eine Temperaturmessung oder die Messung von mechanischen Spannungszuständen im Reifen. Moderne Transponder bestehen aus einem Elektronikbauteil bzw. -Chip, in dem Sensorelemente angeordnet sein können sowie aus einer an dieses Elektronikbauteil angeschlossenen Antenne. Ein Beispiel für einen solchen Transponder offenbart die DE 102 43 441 A1.
Die EP 2 520 401 A2, DE 10 2009 003460 A1, US 4 065 750 A und US 4 131 876 A offenbaren Lampen für Fahrzeuge oder bekannte Vorrichtungen für eine Reifendrucküberwachung.

Ein Problem bei der Reifendrucküberwachung von LKW besteht darin, dass in vielen Fällen der Reifendruck an den Fahrzeugreifen des LKW-Anhängers unabhängig von der Zugmaschine überwacht werden soll. Eine Vielzahl von Zugmaschinen besitzt z. B. kein Reifendrucküberwachungssystem. Auch wenn das Zugfahrzeug ein Reifendrucküberwachungssystem besitzt, kann es vorkommen, dass dieses System nicht mit dem Reifendrucküberwachungssystem des LKW-Anhängers kommunizieren kann. Der Erfindung lag die Aufgabe zugrunde, eine Vorrichtung bereitzustellen, mit der eine sichere Signalübertragung vom Lastwagenanhänger zu der Zugmaschine erfolgen kann.

Gelöst wird die Aufgabe durch Anspruch 1.

Ein Vorteil der Erfindung ist insbesondere darin zu sehen, dass mit der Vorrichtung eine sichere und autarke Signalübertragung von dem Lastwagenanhänger zu der Zugmaschine erfolgen kann. Die Vorrichtung bzw. Warnlampe besitzt eine optimale Konstruktion, um das Warnsignal von dem Lastwagenanhänger zur Zugmaschine zu übermitteln. Ein weiterer wesentlicher Vorteil besteht darin, dass durch die Materialeigenschaften des Armes der Arm bei einer Kollision mit einem fremden Gegenstand flexibel verformbar ist und die Warnlampe dadurch nicht beschädigt wird. Derartige Kollisionen können z. B. auftreten, wenn eine seitliche Ladeklappe am Lastwagenanhänger herunterfällt und mit der Warnlampe kollidiert. Außerdem kann die Warnlampe mit einer Laderampe kollidieren, wenn der Lastwagenanhänger beim Ausladen entsprechend positioniert wird. Die Warnlampe ist insgesamt so konstruiert, dass selbst bei hohen Fahrzeuggeschwindigkeiten des Lastwagens keine wesentlichen Verformungen am Arm der Warnlampe auftreten.

In einer vorteilhaften Weiterbildung der Erfindung ist vorgesehen, dass der Arm ein I-Profil mit Aussparungen aufweist,
wobei mit den Aussparungen die Flexibilität des Armes gezielt beeinflusst wird.
Durch diese Art der Konstruktion des Armes der Warnlampe wird eine ausreichende Flexibilität gewährleistet. Auf der anderen Seite besitzt der Arm eine hohe Biegesteifigkeit.

In einer weiteren vorteilhaften Weiterbildung der Erfindung ist vorgesehen, dass der Arm im mittleren Bereich einen Knick im Bereich zwischen 5 ° und 15° aufweist.

Durch diesen Knick wird eine optimale Krafteinleitung bei einer Kollision mit einem Fremdgegenstand gewährleistet.

In einer weiteren vorteilhaften Weiterbildung der Erfindung ist vorgesehen, dass die Lampe am Ende des Armes in einem geschlossenen Lampengehäuse eingefasst ist, wobei das Lampengehäuse und der Arm einstückig ausgebildet sind.
Dadurch wird die Ausrichtung der Warnlampe in Richtung des Außenspiegels vereinfacht.

In einer weiteren vorteilhaften Weiterbildung der Erfindung ist vorgesehen, dass die Lampe einen seitlichen Blendschutz zur Vermeidung von Streulicht aufweist.
Ein Auftreten von Streulicht würde gegebenenfalls den Gegenverkehr irritieren.

In einer weiteren vorteilhaften Weiterbildung der Erfindung ist vorgesehen, dass das Lampengehäuse auf seiner Außenseite einen Verschleißschutz in Form von Rippen aufweist.
Die Rippen bieten einen zusätzlichen Schutz für das Lampengehäuse. Dieser Schutz ist z. B. wirksam bei einer Kollision der Lampe mit einer Laderampe.

In einer weiteren vorteilhaften Weiterbildung der Erfindung ist vorgesehen, dass der Arm am unteren Ende eine Verstelleinheit aufweist mit der eine Ausrichtung der Lampe nach der Montage der Halterung am Lastwagen-Anhänger erfolgt.
Auf diese Weise lässt sich die Lampe auf einfache Weise ausrichten, um eine sichere Signalübertragung zu gewährleisten.

In einer weiteren vorteilhaften Weiterbildung der Erfindung ist vorgesehen, dass die Verstelleinheit ein Kugelgelenk umfasst, wobei das Kugelgelenk nach der Ausrichtung der Lampe mit einem schraubbaren Klemmmittel an der Halterung fixiert wird.
Durch den Einsatz eines Kugelgelenkes lässt sich eine präzise Einstellung der Warnlampe realisieren.

In einer weiteren vorteilhaften Weiterbildung der Erfindung ist vorgesehen, dass die Halterung in der Seitenansicht ein Winkel-Profil aufweist.
Dadurch lässt sich die Warnlampe auf einfache Weise an dem Lastwagenanhänger montieren.

In einer weiteren vorteilhaften Weiterbildung der Erfindung ist vorgesehen, dass an der Halterung ein elektrischer Stecker angeordnet ist, wobei der Stecker über eine elektrische Leitung mit der Lampe verbunden ist.
Mit dem Stecker lässt sich die Warnlampe auf einfache Weise mit der zentralen Empfangseinheit des Lastwagenanhängers verbinden.

An einem Ausführungsbeispiel soll die Erfindung nachfolgend erläutert werden. Es zeigen:
- Fig. 1:: eine schematische Darstellung einer Lkw-Zugmaschine mit einem Lastwagenanhänger
- Fig. 2:: die Warnlampe in einer Ansicht von vorne
- Fig. 3:: die Warnlampe in einer Seitenansicht
- Fig. 4:: die Warnlampe in einer Aufsicht

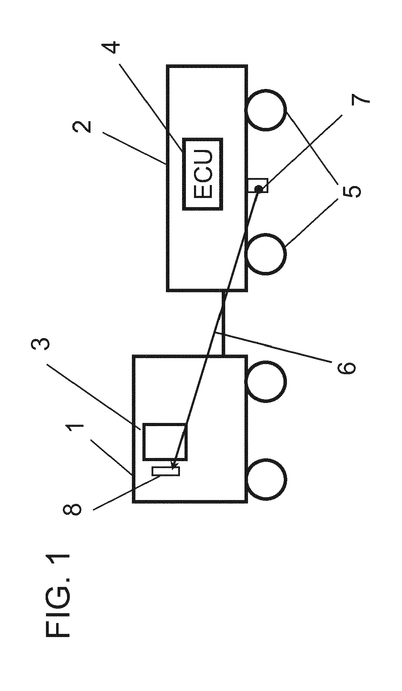

Fig. 1 zeigt einen LKW mit einer Zugmaschine 1 und einem LKW-Anhänger 2. Der LKW-Anhänger 2 besitzt eine Vielzahl von Fahrzeugreifen 5, in denen jeweils Reifendruckmodule angeordnet sind, mit denen der Reifendruck überwacht werden kann.
Die einzelnen Reifenmodule der Fahrzeugreifen 5 sind beispielsweise über eine Funkverbindung mit der zentralen Empfangseinheit 4 verbunden, die wiederum am LKW-Anhänger 2 angeordnet ist. Wenn einer der Fahrzeugreifen 5 einen Minderdruck aufweist, der in etwa 10 bis 20 % von dem vorgegebenen Soll-Wert abweicht, wird ein entsprechendes Warnsignal von der Empfangseinheit 4 registriert.

Die Empfangseinheit 4 detektiert gleichzeitig die fehlerhafte Radpositionen des Fahrzeugreifens mit dem auffälligen Minderdruck. Seitlich vom LKW-Anhänger 2 ist die Warnlampe 7 angeordnet, die über eine Datenleitung oder eine Funkverbindung mit der Empfangseinheit 4 verbunden ist. Liegt ein allgemeiner Warnzustand vor, so wird die Warnlampe 7 von der Empfangseinheit 4 entsprechend aktiviert. Im fahrenden Zustand des LKW wird sodann ein Signal zum Außenspiegel 8 der Zugmaschine projiziert. Dieses Signal informiert den LKW-Fahrer über einen allgemeinen Warnzustand, der auf einen auffälligen Minderdruck eines Fahrzeugreifens am LKW-Anhänger hinweist. Bei dem anschließenden Szenario würde der LKW-Fahrer bei der nächsten Möglichkeit anhalten und die Fahrzeugreifen des LKW-Anhängers überprüfen.
Der Lampenstrahl 6 der Warnlampe 7 wird fokussiert und auf den Seitenspiegel bzw. Außenspiegel 8 der Zugmaschine 1 gerichtet.

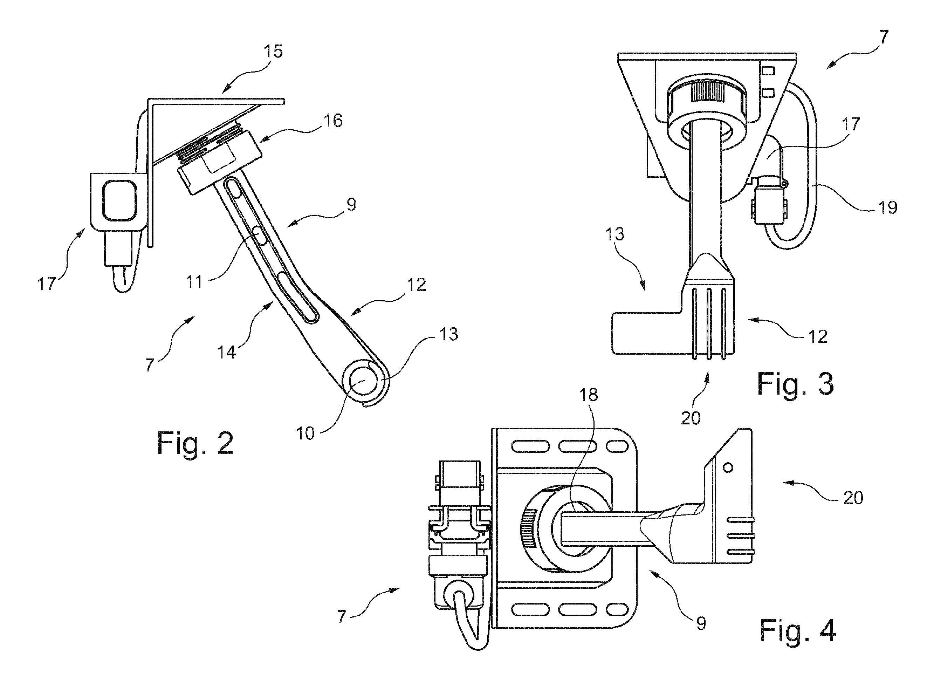

Fig. 2 zeigt die Warnlampe 7 in einer Ansicht von vorne. Die Warnlampe 7 umfasst den Arm 9 der Warnlampe, die Halterung 15 und die Lampe 10. Die Lampe 10 ist in einem Lampengehäuse 12 mit einem Blendschutz 13 angeordnet. Im Falle eines Reifenminderdruckes an einem der Fahrzeugreifen wird die Lampe 10 aktiviert und ein entsprechendes Warnsignal ausgegeben. Dieses Warnsignal wird zu dem Außenspiegel der Zugmaschine geleitet. Der Arm 9 weist ein I-förmiges Profil mit Aussparungen 11 auf. Außerdem befindet sich in etwa in der Mitte des Armes 9 ein Knick 14 mit einem Winkel im Bereich zwischen 5° und 15°. Durch diesen Knick wird eine optimale Krafteinleitung gewährleistet, für den Fall, dass seitlich ein Fremdgegenstand mit der Warnlampe 9 kollidiert. Mit dem schraubbaren Klemmmittel 16 erfolgt die Ausrichtung der Lampe 10. Unter dem Klemmmittel 16 ist ein Kugelgelenk angeordnet, welches mit dem Arm 9 verbunden ist. Das Kugelgelenk liegt gegenüberliegend in der Halterung 15 in einer entsprechenden Kugelpfanne an. Dadurch lässt sich der Arm 9 in jeder Position sicher fixieren. Die Halterung 15 weist ein Winkelprofil auf, an der seitlich ein Stecker 17 angeordnet ist. Mit der Halterung 15 wird die Warnlampe 7 seitlich vom Lastwagenanhänger montiert.

Die Fig. 3 zeigt eine Seitenansicht der Warnlampe 7. An der Außenseite des Lampengehäuses 12 sind drei Rippen angeordnet, die als Verschleißschutz dienen. Die Kabelleitung 19 verbindet die Lampe 10 mit dem Stecker 17.

Fig. 4 zeigt eine Aufsicht der Warnlampe 7. Am unteren Ende des Armes 9 ist das Kugelgelenk 18 angeordnet.

### Bezugszeichenliste

- 1: Zugmaschine
- 2: Lastwagen-Anhänger
- 3: Seitenfenster auf Fahrerseite
- 4: Empfangseinheit am LKW-Anhänger
- 5: Fahrzeugreifen am LKW-Anhänger
- 6: Lichtsignal
- 7: Warnlampe bzw. Vorrichtung zum Anzeigen des Reifendruck-Zustandes
- 8: Außenspiegel an der Zugmaschine
- 9: Arm der Warnleuchte
- 10: Lampe
- 11: Aussparungen
- 12: Lampengehäuse
- 13: Blendschutz
- 14: Knick
- 15: Halterung
- 16: schraubbares Klemmmittel
- 17: Stecker
- 18: Kugelgelenk
- 19: elektrische Leitung
- 20: Rippen

## Patentansprüche

1. Vorrichtung zum Anzeigen eines Reifendruck-Zustandes für Fahrzeugreifen (5) eines Lastwagen-Anhängers (2),
wobei die Vorrichtung einen Arm (9) für die Anordnung einer Lampe (10) und eine Halterung (15) zur Fixierung des Armes (9) an dem Lastwagen-Anhänger (2) umfasst,
wobei der Reifendruck-Zustand in optischer Form mit der Lampe (10) angezeigt wird,
wobei der Arm (9) im Wesentlichen aus einem Elastomer-Material besteht, wodurch der Arm (9) bei einer Kollision mit einem fremden Gegenstand flexibel verformbar ist und der Arm (9) aufgrund seiner elastischen Material-Eigenschaften nach der Kollision wieder in seine Ausgangsstellung zurückkehrt,
**dadurch gekennzeichnet, dass**
in den Fahrzeugreifen (5) Reifenmodule angeordnet sind,
wobei am Lastwagen-Anhänger eine Empfangseinheit (4) zur Aktivierung der Lampe (10) angeordnet ist.

2. Vorrichtung nach Anspruch 1,
**dadurch gekennzeichnet, dass**
der Arm (9) ein I-Profil mit Aussparungen (11) aufweist,
wobei mit den Aussparungen (11) die Flexibilität des Armes (9) gezielt beeinflusst wird.

3. Vorrichtung nach einem der vorhergehenden Ansprüche,
**dadurch gekennzeichnet, dass**
der Arm (9) im mittleren Bereich einen Knick (14) im Bereich zwischen 5° und 15° aufweist.

4. Vorrichtung nach einem der vorhergehenden Ansprüche,
**dadurch gekennzeichnet, dass**
die Lampe (10) am Ende des Armes (9) in einem geschlossenen Lampengehäuse (12) eingefasst ist, wobei das Lampengehäuse (12) und der Arm (9) einstückig ausgebildet sind.

5. Vorrichtung nach einem der vorhergehenden Ansprüche,
**dadurch gekennzeichnet, dass**
die Lampe (10) einen seitlichen Blendschutz (13) zur Vermeidung von Streulicht aufweist.

6. Vorrichtung nach einem der vorhergehenden Ansprüche,
**dadurch gekennzeichnet, dass**
das Lampengehäuse (12) auf seiner Außenseite einen Verschleißschutz in Form von Rippen (20) aufweist.

7. Vorrichtung nach einem der vorhergehenden Ansprüche,
**dadurch gekennzeichnet, dass**
der Arm (9) am unteren Ende eine Verstelleinheit aufweist mit der eine Ausrichtung der Lampe (10) nach der Montage der Halterung (15) am Lastwagen-Anhänger (2) erfolgt.

8. Vorrichtung nach einem der vorhergehenden Ansprüche,
**dadurch gekennzeichnet, dass**
die Verstelleinheit ein Kugelgelenk (18) umfasst, wobei das Kugelgelenk (18) nach der Ausrichtung der Lampe (10) mit einem schraubbaren Klemmmittel (16) an der Halterung (15) fixiert wird.

9. Vorrichtung nach einem der vorhergehenden Ansprüche,
**dadurch gekennzeichnet, dass**
die Halterung (15) in der Seitenansicht ein Winkel-Profil aufweist.

10. Vorrichtung nach einem der vorhergehenden Ansprüche,
**dadurch gekennzeichnet, dass**
an der Halterung (15) ein elektrischer Stecker (17) angeordnet ist, wobei der Stecker (17) über eine elektrische Leitung (19) mit der Lampe (10) verbunden ist.

## Claims

1. Device for displaying a tyre pressure state for vehicle tyres (5) of a truck trailer (2),
wherein the device comprises an arm (9) for the arrangement of a lamp (10) and a mount (15) for securing the arm (9) to the truck trailer (2),
wherein the tyre pressure state is displayed in optical form with the lamp (10),
wherein the arm (9) is composed essentially of an elastomer material, as a result of which in the event of a collision with a foreign object the arm (9) can be deformed flexibly and owing to its elastic material properties the arm (9) returns back to its original position after the collision.
**characterized in that**
tyre modules are arranged in the vehicle tyres (5), wherein a receiver unit (4) for activating the lamp (10) is arranged on the truck trailer.

2. Device according to Claim 1,
**characterized in that**
the arm (9) has an I profile with cutouts (11),
wherein the flexibility of the arm (9) is influenced in a targeted fashion by the cutouts (11).

3. Device according to one of the preceding claims,
**characterized in that**
the arm (9) has a bend (14) in the range between 5° and 15° in the central region.

4. Device according to one of the preceding claims,
**characterized in that**
the lamp (10) is surrounded at the end of the arm (9) in an enclosed lamp housing (12), wherein the lamp housing (12) and the arm (9) are embodied in one piece.

5. Device according to one of the preceding claims,
**characterized in that**
the lamp (10) has a lateral anti-dazzle protection (13) for avoiding scattered light.

6. Device according to one of the preceding claims,
**characterized in that**
the lamp housing (12) has on its outer side an antiwear protection in the form of fins (20).

7. Device according to one of the preceding claims,
**characterized in that**
the arm (9) has at the lower end an adjustment unit with which the lamp (10) is oriented after the installation of the mount (15) on the truck trailer (2).

8. Device according to one of the preceding claims,
**characterized in that**
the adjustment unit comprises a ball-and-socket joint (18), wherein after the orientation of the lamp (10) the ball-and-socket joint (18) is secured to the mount (15) with a screwable clamping means (16).

9. Device according to one of the preceding claims,
**characterized in that**
the mount (15) has a bent profile in the side view.

10. Device according to one of the preceding claims,
**characterized in that**
an electric plug (17) is arranged on the mount (15), wherein the plug (17) is connected to the lamp (10) via an electrical line (19).

## Revendications

1. Dispositif d'affichage de l'état de pression des pneus pour des pneus de véhicule (5) d'une remorque de poids-lourds (2),
le dispositif comprenant un bras (9) pour l'agencement d'une lampe (10) et une fixation (15) pour la fixation du bras (9) à la remorque de poids-lourds (2),
l'état de pression des pneus étant indiqué sous forme optique avec la lampe (10),
le bras (9) se composant essentiellement d'un matériau élastomère, de sorte que le bras (9), dans le cas d'une collision avec un objet étranger, puisse se déformer de manière flexible et que le bras (9) revienne après la collision à nouveau dans sa position de départ en raison des propriétés élastiques de son matériau,
**caractérisé en ce que**
des modules de pneu sont disposés dans les pneus de véhicule (5),
une unité de réception (4) pour l'activation de la lampe (10) étant disposée sur la remorque de poids-lourds.

2. Dispositif selon la revendication 1,
**caractérisé en ce que**
le bras (9) présente un profilé en I avec des évidements (11),
la flexibilité du bras (9) étant influencée de manière ciblée avec les évidements (11).

3. Dispositif selon l'une quelconque des revendications précédentes,
**caractérisé en ce que**
le bras (9) présente, dans la région centrale, une inflexion (14) de l'ordre de 5° à 15°.

4. Dispositif selon l'une quelconque des revendications précédentes,
**caractérisé en ce que**
la lampe (10) est enchâssée à l'extrémité du bras (9) dans un boîtier de lampe fermé (12), le boîtier de lampe (12) et le bras (9) étant réalisés d'une seule pièce.

5. Dispositif selon l'une quelconque des revendications précédentes,
**caractérisé en ce que**
la lampe (10) présente une protection latérale contre l'éblouissement (13) pour éviter la lumière parasite.

6. Dispositif selon l'une quelconque des revendications précédentes,
**caractérisé en ce que**
le boîtier de lampe (12) présente, sur son côté extérieur, une protection contre l'usure sous la forme de rainures (20).

7. Dispositif selon l'une quelconque des revendications précédentes,
**caractérisé en ce que**
le bras (9) présente, à l'extrémité inférieure, une unité de réglage avec laquelle une orientation de la lampe (10) a lieu après le montage de la fixation (15) sur la remorque de poids-lourds (2).

8. Dispositif selon l'une quelconque des revendications précédentes,
**caractérisé en ce que**
l'unité de réglage comprend une articulation à rotule (18), l'articulation à rotule (18) étant fixée sur la fixation (15) après l'orientation de la lampe (10) avec un moyen de serrage vissable (16).

9. Dispositif selon l'une quelconque des revendications précédentes,
**caractérisé en ce que**
la fixation (15) présente en vue de côté un profilé coudé.

10. Dispositif selon l'une quelconque des revendications précédentes,
**caractérisé en ce**
**qu'**un connecteur électrique (17) est disposé sur la fixation (15), le connecteur (17) étant connecté à la lampe (10) par le biais d'une conduite électrique (19).
